(19) Europäisches Patentamt
European Patent Office
Office européen des brevets

(11) **EP 3 388 818 B1**

(12) **FASCICULE DE BREVET EUROPEEN**

(45) Date de publication et mention
de la délivrance du brevet:
**14.08.2024   Bulletin 2024/33**

(21) Numéro de dépôt: **18166702.3**

(22) Date de dépôt: **10.04.2018**

(51) Classification Internationale des Brevets (IPC):
***G01N 21/64*** *(2006.01)*      ***G01N 21/65*** *(2006.01)*

(52) Classification Coopérative des Brevets (CPC):
**G01N 21/65; G01N 21/6486**

(54) **PROCÉDÉ D'ACQUISITION D'UN SPECTRE**

VERFAHREN ZUR ERFASSUNG EINES SPEKTRUMS

METHOD OF ACQUIRING A SPECTRUM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.04.2017   FR 1753311**

(43) Date de publication de la demande:
**17.10.2018   Bulletin 2018/42**

(73) Titulaire: **Commissariat à l'énergie atomique
et aux énergies alternatives
75015 Paris (FR)**

(72) Inventeurs:
• **BARITAUX, Jean-Charles
38170 Seyssinet-Pariset (FR)**
• **SCHULTZ, Emmanuelle
38120 Saint-Égrève (FR)**
• **REBUFFEL, Veronique
38700 Corenc (FR)**

(74) Mandataire: **INNOV-GROUP
310, avenue Berthelot
69372 Lyon Cedex 08 (FR)**

(56) Documents cités:
**WO-A1-2016/003371     US-A1- 2015 335 248**

• **HOLLY J BUTLER ET AL: "Using Raman
spectroscopy to characterize biological
materials", NATURE PROTOCOLS, NATURE
PUBLISHING GROUP, GB, vol. 11, 1 January 2016
(2016-01-01), pages 664 - 687, XP009501637,
ISSN: 1750-2799, [retrieved on 20160310], DOI:
10.1038/NPROT.2016.036**

**Description**

**DOMAINE TECHNIQUE**

Le domaine technique de l'invention est l'acquisition d'un spectre à partir d'un rayonnement lumineux émis ou diffusé par une particule, et notamment une particule biologique, en réponse à une illumination par un rayonnement lumineux.

**ART ANTERIEUR**

La spectrométrie Raman est un outil de caractérisation très répandu, basé sur l'acquisition d'un spectre d'un rayonnement diffusé, de façon inélastique, par un échantillon, dit spectre Raman, l'échantillon étant exposé à un rayonnement lumineux monochromatique incident. Un spectre Raman est généralement représenté sous la forme d'un spectre de la variation du nombre d'onde du rayonnement diffusé par l'échantillon par rapport au nombre d'onde du rayonnement lumineux monochromatique. Ce spectre représente une signature de transitions énergétiques de molécules composant l'échantillon analysé.

L'intensité d'un signal de diffusion Raman est faible et de façon à acquérir un spectre Raman exploitable, le rayonnement incident doit être intense. Ce rayonnement est généralement émis par une source laser, dont la puissance est ajustée. Sous l'effet d'une exposition trop prolongée au rayonnement incident, l'échantillon analysé peut se dégrader. Cette dégradation, pas toujours perceptible à l'oeil, peut entraîner une modification structurale de l'échantillon, désignée par le terme photo-dommage, ou photo-dégradation. Ainsi, lorsqu'un échantillon a été surexposé, le spectre Raman obtenu n'est plus représentatif de la structure de l'échantillon.

La publication Butler H. et al "Using Raman spectroscopy to characterize biological materials", Nature Protocols, Vol. 11 No4, 2016, propose une démarche de type essai/erreur pour obtenir un spectre présentant une bonne qualité spectrale. Il s'agit d'un procédé itératif, effectué en ajustant la puissance d'une source laser, ou une durée d'exposition, de façon à obtenir un spectre de bonne qualité. Un inconvénient de cette démarche est que les échantillons correspondant à des erreurs sont détruits, et les spectres qui leur sont associés ne sont pas utilisables. De plus, une telle démarche suppose que les conditions d'illumination (puissance et/ou durée) soient ajustées pour chaque type d'échantillon considéré. Cela suppose un certain apprentissage, pour chaque type d'échantillon adressé. Par ailleurs, une telle méthode semble difficilement applicable lorsque les échantillons analysés sont hétérogènes. En effet, les conditions d'exposition optimales d'un type d'échantillon ne correspondent pas forcément aux conditions optimales d'un autre type d'échantillon. Une méthode similaire est décrite dans US2015/335248.

La méthode présentée dans WO2016/003371 vise également à améliorer la qualité d'un spectre, en additionnant un nombre prédéterminé de différents spectres, de façon à obtenir un spectre accumulé. Mais le fait de se baser sur une accumulation d'un nombre prédéterminé de spectres suppose un a priori sur l'échantillon, de façon à prédéterminer le nombre de spectres à accumuler. La méthode présentée dans WO2016/003371 semble difficilement applicable lorsque des échantillons de différents types doivent être analysés, sans a priori.

Il résulte de ce qui précède que l'intensité du rayonnement incident doit être suffisamment élevée pour obtenir un spectre Raman exploitable, tout en étant inférieure à un certain seuil, dit seuil d'exposition, de façon à ne pas compromettre l'intégrité de l'échantillon. Un tel compromis est difficile à établir a priori, d'une part parce que la nature de l'échantillon n'est pas connue, d'autre part parce que le seuil d'exposition peut varier entre deux échantillons de natures différentes.

Outre l'intensité du rayonnement incident, la durée de l'exposition est également importante et on a constaté qu'au-delà d'une certaine exposition intégrée, un phénomène de photo-dommage apparaît. Il est donc nécessaire d'optimiser à la fois la puissance du rayonnement incident, mais également la durée de l'exposition de l'échantillon au rayonnement incident.

Une première approche, conservative, est d'ajuster la puissance de telle sorte qu'elle soit bien en deçà du seuil d'exposition. Mais cela peut conduire à l'obtention de spectres peu représentatifs, obtenus au cours d'une longue durée d'acquisition.

L'objet de l'invention est d'adresser ce problème, par un procédé d'acquisition permettant d'optimiser l'exposition d'un échantillon analysé, tout en prévenant les risques de dégradation du spectre résultant d'une exposition excessive.

**EXPOSE DE L'INVENTION**

Un premier objet de l'invention est un procédé d'acquisition d'un spectre représentatif d'une particule comportant les étapes suivantes,

- illumination de la particule par une source de lumière;
- détection d'un rayonnement lumineux émis ou diffusé par ladite particule sous l'effet de l'illumination et acquisition d'un spectre à partir du rayonnement lumineux détecté;

le procédé étant caractérisé en ce que l'acquisition du spectre comporte les étapes suivantes :

    i) acquisition d'un premier spectre élémentaire et formation d'un spectre combiné initial à partir du premier spectre élémentaire, la durée d'acquisition du premier spectre élémentaire étant déterminée pour éviter une dégradation de la particule;
    ii) acquisition d'un spectre élémentaire dit courant ;

iii) prise en compte d'un spectre de référence ;
iv) détermination d'un critère d'acceptation du spectre élémentaire courant, le critère d'acceptation correspondant à un écart entre le spectre élémentaire courant et le spectre de référence ;
v) en fonction du critère d'acceptation :

- acceptation du spectre élémentaire courant et mise à jour du spectre combiné par une addition du spectre élémentaire courant au spectre combiné initial ou au spectre combiné résultant d'une itération précédente;
- ou rejet du spectre élémentaire courant ;

vi) réitération des étapes ii) à vi), ou sortie de l'itération ;
vii) détermination d'un spectre, représentatif de la particule, en fonction du spectre combiné obtenu lors de l'étape v) de la dernière itération.

A chaque itération est associée un spectre combiné. Lors de la première itération, il s'agit du spectre combiné initial établi lors de l'étape i). A partir de la deuxième itération, il s'agit du spectre combiné résultant de l'itération précédente.

Lors de l'étape iv), le critère d'acceptation peut être déterminé en fonction d'une comparaison entre le spectre élémentaire courant et le spectre de référence. La comparaison peut notamment comprendre une soustraction, un ratio, un produit de corrélation, un produit scalaire.

Selon un mode de réalisation, le spectre de référence est un spectre moyen, représentatif d'une moyenne de spectres élémentaires formant le spectre combiné initial ou le spectre combiné résultant d'une itération précédente. Le spectre moyen peut alors être établi à partir d'une normalisation de spectres élémentaires formant le spectre combiné, en fonction d'une durée d'acquisition de chaque spectre élémentaire formant le spectre combiné pris en compte au cours d'une itération ou de chaque itération.

Selon un mode de réalisation, lors de l'étape iv), le critère d'acceptation est déterminé à partir d'une soustraction du spectre de référence et du spectre élémentaire courant, de préférence normalisée par un indicateur du bruit dans le spectre de référence et dans le spectre élémentaire courant.

Le spectre de référence peut également être :

- le premier spectre élémentaire, acquis lors de l'étape i), ou un spectre élémentaire acquis au cours d'une itération précédente ;
- ou un spectre déterminé a priori. Le spectre a priori peut notamment correspondre au spectre représentatif d'une particule cible.

Selon un mode de réalisation, lequel le spectre de référence comporte une ou plusieurs régions d'intérêt, dites régions d'intérêt de référence du spectre élémentaire courant. Le critère d'acceptation peut alors être établi par une comparaison du spectre élémentaire courant, dans au moins une région d'intérêt sélectionnée, avec le spectre de référence. Par exemple, la région d'intérêt sélectionnée est représentative d'une bande spectrale apte à se déformer lorsque la particule est illuminée par une illumination trop importante, et au moins une région d'intérêt de référence est limitrophe de ladite bande spectrale.

Quel que soit le mode de réalisation, lors de l'étape v), la mise à jour du spectre combiné peut être réalisée par une somme, éventuellement pondérée :

- du spectre élémentaire courant et du spectre combiné initial ou du spectre combiné résultant d'une itération précédente;
- ou du spectre élémentaire courant, auquel un traitement est appliqué, et du spectre combiné initial ou du spectre combiné résultant d'une itération précédente.

Quel que soit le mode de réalisation, lors de l'étape vi), le critère d'itération peut correspondre:

- à un nombre prédéterminé d'itérations ;
- et/ou à l'obtention d'un nombre prédéterminé de rejets de spectres élémentaires courants ;
- et/ou à l'obtention d'un nombre d'évènements prédéterminés dans le spectre combiné résultant de l'étape v).

Selon un mode de réalisation, lors de l'étape ii), chaque spectre élémentaire courant est acquis selon une même durée d'acquisition. Selon un autre mode de réalisation, au moins deux spectres élémentaires courant sont acquis selon deux durées d'acquisition différentes.

Selon un mode de réalisation, suite à la première itération, l'étape ii) comporte une étape de détermination d'une durée d'acquisition du spectre courant en fonction de la valeur d'un critère d'acceptation résultant de l'étape iii) d'une itération précédente, ou en fonction du rapport signal à bruit du spectre combiné résultant de l'itération précédente, ou de sa variation.

Selon un mode de réalisation, la source de lumière génère un faisceau d'illumination se propageant jusqu'à la particule. Suite à la première itération, l'étape ii) comporte une étape de détermination d'une puissance du faisceau d'illumination en fonction de la valeur d'un critère d'acceptation résultant de l'étape iv) d'une itération précédente.

Selon un mode de réalisation, au moins deux spectres élémentaires courant sont acquis alors que la particule est illuminée selon un faisceau d'illumination de deux puissances différentes. Le photodétecteur peut être un spectromètre Raman, le spectre acquis étant un spectre Raman représentatif de la particule. Le photodétecteur peut être un spectromètre de fluorescence, le spectre acquis étant un spectre de fluorescence de la particule.

Un autre objet de l'invention est un dispositif d'analyse d'une particule comportant :

- une source de lumière;
- un support destiné à recevoir une particule;
- un photodétecteur apte à détecter un signal de réponse, émis par la particule lorsqu'elle est illuminée par la source de lumière et à en former un spectre ;
- un processeur, configuré pour mettre en oeuvre les étapes i) à vii) du procédé selon le premier objet de l'invention, à partir d'une pluralité de spectres élémentaires acquis par le photodétecteur, pour former un spectre représentatif de la particule.

D'autres avantages et caractéristiques ressortiront plus clairement de la description qui va suivre de modes particuliers de réalisation de l'invention, donnés à titre d'exemples non limitatifs, et représentés aux dessins annexés listés ci-dessous.

## FIGURES

La figure 1 représente un exemple de dispositif de spectrométrie Raman.

Les figures 2A et 2B représentent des signatures spectrales Raman de bactéries respectivement avant et après la dégradation de ces dernières par une surexposition à un rayonnement lumineux.

La figure 3A illustre une proportion de bactéries *Serratia marcescens* subissant un photo-dommage en fonction d'une durée de l'exposition à un faisceau lumineux. Les figures 3B à 3C sont des figures similaires à la figure 3A, et concernent respectivement les espèces *Staphilococcus epidermidis* et *Bacillus subtilis.*

La figure 4 représente les principales étapes d'un procédé selon l'invention.

Les figures 5A, 5B et 5C représentent l'évolution d'un spectre Raman obtenu par la combinaison de spectres élémentaires d'une bactérie, chaque spectre élémentaire étant acquis à différents instants à partir d'un instant initial à partir duquel la bactérie est exposée à un faisceau d'illumination. La durée d'acquisition de chaque spectre élémentaire est de 1 seconde.

La figure 5D représente l'évolution d'un critère d'acceptation calculé pour chacun des 30 spectres représentés sur les figures 5A à 5C.

La figure 6A représente plusieurs spectres Raman d'une même espèce de bactérie, acquis sous l'effet d'une illumination continue d'une durée de 10 secondes.

La figure 6B représente différents spectres Raman de l'espèce de bactérie analysée sur la figure 6A, chaque spectre résultant d'une acquisition successive d'une pluralité de spectres élémentaires, chaque spectre élémentaire étant acquis durant une période temporelle de 1 seconde.

Les figures 6C, 6D et 6E représentent différents spectres Raman obtenus dans des conditions analogues de celles de la figure 6B, la durée d'acquisition de chaque spectre élémentaire étant respectivement de 500 ms, 200 ms et 100 ms.

## EXPOSE DE MODES DE REALISATION PARTICULIERS

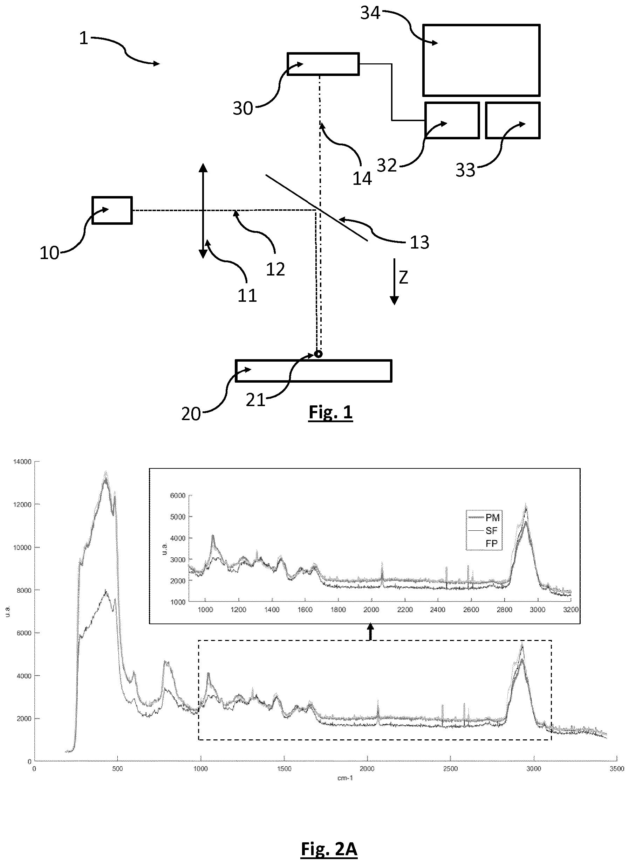

La figure 1 est un exemple de réalisation d'un dispositif 1 permettant la mise en oeuvre de l'invention. Une source de lumière laser 10 est apte à générer un faisceau d'illumination 12, de préférence monochromatique, se propageant jusqu'à une particule 21 à analyser, la particule étant disposée sur un support 20. Un système optique 11 permet une focalisation du faisceau d'illumination 12 sur la particule 21. Une lame semi-réfléchissante 13 renvoie le faisceau d'illumination 12 selon un axe de propagation Z. Sous l'effet de l'illumination par le faisceau d'illumination 12, la particule 21 est apte à produire un rayonnement lumineux de réponse 14. Le rayonnement de réponse 14 peut être un rayonnement de fluorescence, émis par la particule sous l'effet de son illumination. Il peut également s'agir d'un rayonnement diffusé par la particule, en particulier par diffusion Raman. Dans l'exemple représenté sur la figure 1, le rayonnement de réponse 14 est un rayonnement de diffusion. Il est détecté par un photodétecteur spectrométrique 30, apte à en acquérir un spectre de diffusion Raman. Dans cet exemple, le photodétecteur 30 est un spectromètre Raman fourni parTornado Spectral Systems sous la référence HyperFluxU1. Il est relié à un processeur 32, par exemple un microprocesseur, permettant la mise en oeuvre des instructions du procédé décrit ci-après. Le microprocesseur est relié à une mémoire 33 dans laquelle ces instructions sont stockées. Il peut également être relié à un écran d'affichage 34.

Dans cet exemple, le spectre acquis est un spectre Raman, représentant un histogramme d'un nombre d'onde $\sigma$ dit différentiel, représentant une différence entre le nombre d'onde $\sigma_{14}$ du rayonnement 14 détecté par rapport au nombre d'onde $\sigma_{12}$ du faisceau d'illumination 12.

La particule 21 analysée peut être une espèce biologique telle une cellule, un microorganisme, par exemple une bactérie, une levure, un champignon, une spore. La particule 21 peut également être une molécule chimique. Elle peut être déposée sur un support 20 ou être disposée dans un milieu, par exemple un milieu de culture, solide ou liquide. Dans les exemples présentés ci-dessous, l'échantillon est formé d'une goutte d'une solution aqueuse, comportant au moins une espèce à analyser. La solution aqueuse est par exemple de l'eau distillée déposée sur une lame de quartz. La solution s'évapore et l'analyse de l'espèce est effectuée après évaporation de cette dernière.

La puissance laser est ajustée de manière à obtenir un spectre exploitable selon une durée inférieure à 5 s, voire 1s. La puissance lumineuse du faisceau d'illumination 12 peut par exemple être de 17 mW. Elle peut également être variable. La longueur d'onde du faisceau d'illumination est de 532 nm.

La figure 2A représente des spectres Raman obtenus pour trois espèces de bactéries (*Proteus mirabilis, Shigella flexnerii, Francisella pseudomonas*), respectivement désignées par les acronymes PM, SF et FP. La partie délimitée par un cadre correspond à la plage de nombre d'onde différentiel, usuellement désigné par le terme anglosaxon Raman Shift, comportant les principaux pics constituant la signature de chaque bactérie. Ces pics se situent ici entre 650 cm$^{-1}$ et 1800 cm$^{-1}$ ainsi qu'entre 2600 cm$^{-1}$ et 3200 cm$^{-1}$.

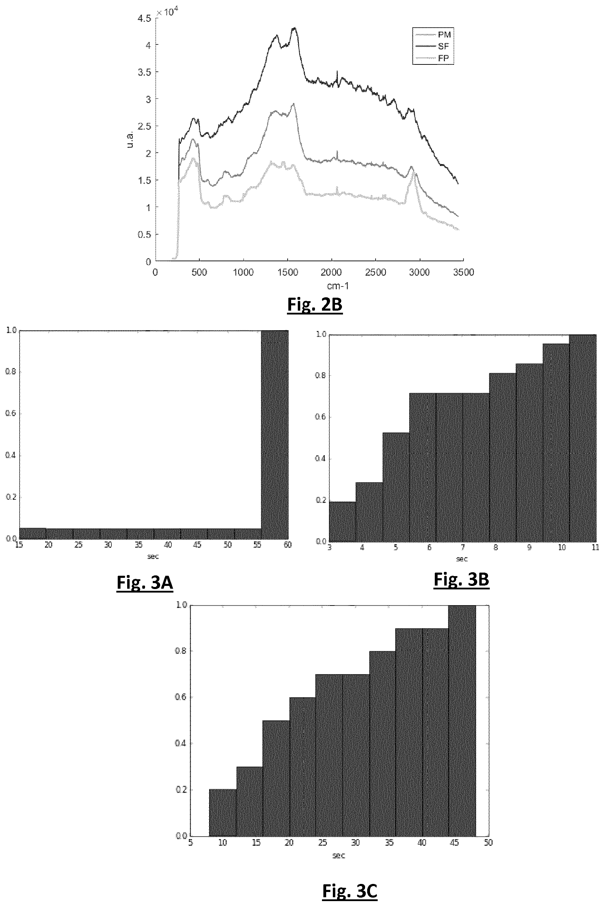

La figure 2B représente des spectres Raman obtenus pour ces mêmes espèces, les espèces ayant subi une surexposition (photo-dommage). Dans ce cas, le spectre Raman acquis par le spectromètre ne comporte pas d'information spectrale exploitable permettant l'identification de chaque bactérie.

Les inventeurs ont par ailleurs constaté que les bactéries, ou, d'une façon générale, les espèces biologiques, présentent une sensibilité différente à l'égard de la photo-dégradation en fonction de leur nature. La figure 3A représente les résultats d'une étude visant à déterminer la sensibilité de la bactérie *Serratia marcescens* à une exposition prolongée à un faisceau d'illumination de puissance optique 17 mW. Un spectre Raman a été effectué, pour plusieurs bactéries, durant différentes durées d'acquisition. On a ensuite déterminé une proportion de bactéries ayant subi un photo-dommage. Cette détermination a été réalisée au microscope, une bactérie surexposée n'étant plus visible ou coupée en plusieurs parties, ainsi qu'en réalisant un spectre Raman, une bactérie dégradée présentant des pics caractéristiques du carbone. La figure 3A représente un taux de bactéries photo-dégradées, compris entre 0 et 1, en fonction de la durée de l'exposition, exprimée en secondes. Sur la figure 3A, on observe que jusqu'à une durée d'exposition de 55 secondes, seule 1 bactérie sur 10 est dégradée, ce qui correspond à un taux de dégradation de 0,1. Après 60 secondes, toutes les bactéries sont dégradées, ce qui correspond à un taux de dégradation égal à 1.

Des essais ont été réalisés, selon le même mode opératoire, sur les espèces de type *Staphilococcus epidermidis,* et *Bacillus subtilis.* Les résultats de ces essais sont respectivement présentés sur les figures 3B et 3C. On observe que l'espèce *Staphilococcus epidermidis* est particulièrement fragile, puisque le taux de dégradation est de 1 lorsque la durée d'exposition atteint 11s. Ces essais confirment que la sensibilité d'une espèce biologique à l'égard d'une surexposition varie considérablement selon sa constitution, certaines espèces étant plus résistantes que d'autres.

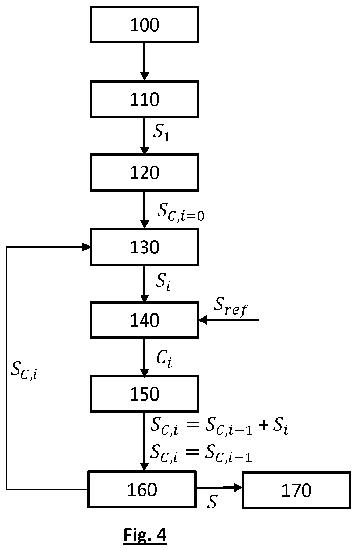

Les inventeurs ont établi un procédé d'acquisition permettant d'obtenir une exposition optimale de l'espèce analysée, sans connaissance préalable de cette dernière. Une telle exposition permet d'obtenir un spectre présentant des pics dont le rapport signal à bruit est élevé, sans dégradation de l'espèce du fait d'une surexposition. Les principales étapes de ce procédé itératif sont décrites ci-dessous, en lien avec la figure 4. D'une façon générale, ce procédé vise à acquérir successivement plusieurs spectres $S_i$, dits spectres élémentaires, et de former progressivement un spectre, dit spectre combiné $S_C$, en combinant les différents spectres élémentaires acquis. Chaque spectre élémentaire est acquis durant une durée d'acquisition $T_i$ suffisamment faible de telle sorte qu'au moins un spectre élémentaire soit exploitable, en n'étant pas affecté par le photo-dommage. Cette durée d'acquisition est généralement inférieure à 5 s et est de préférence inférieure à 2 s. Elle peut notamment être comprise entre 200 ms et 2s. Chaque spectre élémentaire $S_i$ peut alors être additionné de façon à former le spectre combiné $S_{C,i}$, et cela jusqu'à ce qu'un photo-dommage soit observé sur un spectre élémentaire.

Etape 100 : illumination de l'espèce par le faisceau d'illumination 12. La puissance du faisceau d'illumination peut être modifiée entre deux acquisitions successives.

Etape 110 : acquisition d'un premier spectre $S_1$, dit premier spectre élémentaire, durant une première durée d'acquisition $T_1$ déterminée. Cette durée doit être suffisamment courte pour éviter toute dégradation de l'espèce examinée lors de cette première acquisition. Elle peut notamment être comprise entre 100 ms et 5s, et est de préférence comprise entre 200 ms et 2s.

Etape 120 : constitution d'un spectre dit spectre combiné initial $S_{C,i=0}$, à partir du premier spectre élémentaire . Il peut notamment s'agir d'une simple relation d'égalité, de telle sorte que lors de la première itération, $S_{C,i=0} = S_1$.

Les étapes 130 à 160 sont alors réalisées de façon itérative. Les étapes 110 et 120 sont des étapes d'initialisation de ce procédé itératif. Le rang de l'itération est désigné par l'indice $i$. Après l'étape 120, l'indice $i$ prend la valeur 2. A chaque itération correspond un spectre combiné $S_{C,i-1}$, issu d'une itération précédente. Lors de la première itération, il s'agit du spectre combiné initial $S_{C,i=0}$.

Etape 130 : acquisition d'un spectre élémentaire $S_i$, dit spectre élémentaire courant. Le terme courant désigne le spectre élémentaire acquis lors de l'itération $i$. Chaque spectre élémentaire $S_i$ peut être acquis dans les mêmes conditions d'acquisition que le premier spectre élémentaire $S_1$, la puissance optique du faisceau d'illumination 12 étant inchangée et la durée d'exposition $T_i$ étant comprise dans la même plage de valeur, voire identique, à la première durée d'acquisition $T_1$.

En variante, la puissance $P_i$ du faisceau d'illumination 12 au cours d'une acquisition $i$ peut être modulée, en étant augmentée ou diminuée. Il en est de même de la durée d'exposition $T_i$. Ces aspects sont plus largement décrits par la suite.

Etape 140 : définition d'un critère d'acceptation $C_i$ du spectre élémentaire courant $S_i$ acquis lors de l'étape 130.

Il s'agit d'évaluer la pertinence du spectre élémentaire courant $S_i$, de façon soit à l'accepter, c'est-à-dire à le prendre en compte dans les étapes ultérieures, soit à le rejeter. Cette étape prend en compte un spectre de référence $S_{ref}$. Au cours de cette étape, on compare le spectre élémentaire courant $S_i$ au spectre de référence $S_{ref}$ de façon à former un critère d'acceptation $C_i$ associé au spectre élémentaire courant $S_i$. Le critère d'acceptation $C_i$ représente un écart du spectre élémentaire courant $S_i$ par rapport au spectre de référence $S_{ref}$. Lorsque cet écart est trop important, le spectre élémentaire courant est rejeté. On estime que lorsque le spectre élémentaire courant se distingue du spectre de référence, le spectre élémentaire courant est probablement affecté par une photo-dégradation et il est préférable de ne pas le prendre en compte. Des exemples de critères d'acceptation sont indiqués par la suite.

Dans cet exemple, le spectre de référence $S_{ref}$ est formé par un spectre, dit spectre moyen, noté $m_i$, formé par une moyenne de plusieurs spectres élémentaires $S_1 ... S_{i-1}$ acquis au cours des itérations précédentes. Cet exemple est détaillé par la suite.

Le spectre de référence $S_{ref}$ peut être également formé par un spectre élémentaire courant $S_{i-1}$, $S_{i-2}$ acquis au cours des itérations précédentes. Il peut en particulier s'agir du spectre élémentaire $S_{i-1}$ acquis au cours de l'itération précédente. Le critère d'acceptation $C_i$ permet alors de déterminer un écart apparaissant entre le spectre élémentaire courant et le ou les derniers spectres élémentaires courant acquis.

Le spectre de référence $S_{ref}$ peut être un spectre prédéterminé, par exemple un spectre représentatif d'une particule cible dont on souhaite vérifier si elle correspond à la particule analysée. Le critère d'acceptation peut alors quantifier une corrélation entre le spectre de référence $S_{ref}$ et le spectre élémentaire courant $S_i$, par exemple par le biais d'un produit scalaire entre les deux spectres.

Le spectre de référence $S_{ref}$ peut également être formé par une ou plusieurs régions d'intérêt $ROI_{ref}$, dites de référence, du spectre élémentaire courant $S_i$. Dans ce cas, le critère d'acceptation peut correspondre à un écart entre le spectre élémentaire courant $S_i$, dans une région d'intérêt sélectionnée $ROI_s$, avec les régions d'intérêt de référence $ROI_{ref}$ du spectre élémentaire courant. Autrement dit, selon cette variante, la critère d'acceptation comporte une comparaison entre une (ou plusieurs) région d'intérêt sélectionnées $ROI_s$ du spectre élémentaire courant avec une (ou plusieurs) régions d'intérêt de référence $ROI_{ref}$ du spectre courant $S_i$. Par exemple, une région d'intérêt sélectionnée $ROI_s$ correspond à une bande spectrale dans laquelle un pic, ou une déformation du spectre, peut apparaître lors de l'apparition d'un photo-dommage. Les régions d'intérêt de référence $ROI_{ref}$ peuvent s'étendre de part et d'autre de la région d'intérêt sélectionnée. La comparaison du spectre élémentaire courant, entre la région d'intérêt sélectionnée $ROI_s$ et les régions d'intérêt de référence $ROI_{ref}$ permet une détecter l'apparition d'un pic, ou d'une déformation, résultant de l'apparition d'un photo-dommage.

Le critère d'acceptation $C_i$ peut être formé par une combinaison de plusieurs critères d'acceptation élémentaires, chaque critère d'acceptation élémentaire résultant d'une prise en compte d'un spectre de référence différent.

Etape 150 : mise à jour du spectre combiné. En fonction de la valeur du critère d'acceptation $C_i$ déterminée lors de l'étape 140, relativement au spectre de référence $S_{ref}$, le spectre élémentaire courant $S_i$ est soit accepté, soit rejeté. Dans le cas où il est accepté, le spectre combiné $S_{C,i}$ est mis à jour par une somme, éventuellement pondérée, du spectre combiné obtenu au cours l'itération précédente $i - 1$. Ainsi, $S_{C,i} = S_{C,i-1} + p_i S_i$, (1) où $p_i$ est un terme de pondération. Le terme de pondération est généralement égal à 1.

Le spectre élémentaire courant $S_i$ peut faire l'objet d'un traitement avant d'être ajouté au spectre combiné $S_{C,i-1}$ issu de l'itération précédente. Des exemples de traitement possibles sont par exemple un lissage et/ou une soustraction de la ligne de base. Lorsque la puissance $P_i$ du faisceau d'illumination 12 évolue entre les différentes itérations, le spectre élémentaire peut être corrigé par une fonction de correction $f_i$ prenant en compte ladite puissance. Une telle fonction de correction permet notamment une normalisation du spectre acquis par rapport à une valeur de puissance prédéterminée, par exemple une valeur unitaire. Une telle normalisation est décrite dans le détail par la suite.

Lorsque le spectre élémentaire courant $S_i$ est rejeté, le spectre combiné $S_{C,i}$ n'évolue pas et demeure tel qu'il était avant l'acquisition de ce spectre élémentaire courant : $S_{C,i} = S_{C,i-1}$ (1').

Par comparaison du spectre élémentaire courant $S_i$ avec un spectre de référence $S_{ref}$ on entend en particulier une opération mettant en oeuvre une soustraction, ou un ratio, la soustraction ou le ratio pouvant être normalisés. Il peut également s'agir de l'établissement d'une grandeur traduisant une corrélation entre les deux spectres, par exemple par le biais d'un produit scalaire entre des vecteurs représentant respectivement le spectre élémentaire courant et le spectre de référence.

Etape 160 : Réitération ou sortie d'algorithme. Tant qu'un critère d'arrêt d'itération n'a pas été atteint, le procédé réitère les étapes 130 à 160, en incrémentant l'indice d'itération $i$, de façon à permettre une mise à jour du spectre combiné $S_{C,i}$ à l'aide d'un nouveau spectre élémentaire courant $S_i$. Lorsque le critère d'arrêt d'itération a été atteint, le procédé passe à l'étape 170.

Le critère d'arrêt d'itération peut être un nombre $N_i$ prédéterminé d'itérations $i$. Le critère d'arrêt d'itération peut également être établi en fonction du critère d'accep-

tation $C_i$ calculé lors de l'étape 140. Ainsi, le critère d'arrêt d'itération peut être considéré comme atteint lors du rejet d'un spectre élémentaire courant $S_i$. Autrement dit, tant que chaque spectre élémentaire courant est accepté, les itérations se poursuivent et le spectre combiné $S_{C,i}$ est mis à jour à chaque itération, par la combinaison avec chaque spectre élémentaire courant $S_i$. Lorsqu'un spectre élémentaire courant est rejeté, on considère que l'espèce observée subit une photo-dégradation. A partir de cet instant, on considère que le spectre élémentaire courant $S_i$ n'est plus représentatif de l'espèce analysée 21 et la constitution du spectre combiné $S_{C,i}$ s'arrête. Le critère d'arrêt d'itération peut également être atteint lorsque plusieurs spectres élémentaires successifs sont rejetés, par exemple 2 ou 3 spectres élémentaires successifs. Le critère d'itération peut également correspondre à un nombre maximal de détections comptabilisées dans un ou plusieurs pics du spectre combiné.

<u>Etape 170</u> : A partir du spectre combiné $S_{C,i}$ obtenu lors la dernière itération, c'est-à-dire lors de l'étape 150 précédent ladite étape 170, on établit un spectre S représentatif de de l'espèce analysée 21. Ce spectre peut être obtenu par une simple relation d'égalité, de telle sorte que S = $S_{C,i}$.

On a ainsi constitué un spectre S de l'espèce analysée par une combinaison progressive de spectres élémentaires $S_i$. La durée d'acquisition cumulée de ce spectre est : $T = \Sigma_i T_i$

<u>Exemples de critère d'acceptation</u>

Comme précédemment indiqué, le critère d'acceptation $C_i$ associé à chaque spectre élémentaire courant $S_i$ représente un écart de chaque spectre élémentaire courant $S_i$ par rapport à spectre de référence $S_{ref}$. Le spectre de référence peut être

- le spectre élémentaire $S_{i-1}$ acquis lors de l'itération précédente ;
- un spectre moyen $m_i$, calculé en effectuant une moyenne de spectres élémentaires $S_1 ... S_{i-1}$ formant le spectre combiné $S_C$;
- le spectre combiné $S_C$, ce dernier étant ramené à la durée d'acquisition $T_i$ du spectre courant $S_i$.

Selon un exemple, le spectre de référence $S_{ref}$ est un spectre $m_i$ dit moyen, obtenu par une moyenne de l'ensemble des $i - 1$ spectres élémentaires $S_1 ... S_{i-1}$ formant le spectre combiné, précédemment à l'acquisition du spectre élémentaire courant $S_i$. Ainsi, on peut établir un critère d'acceptation $C_i$ de telle sorte que :

$$C_i = \frac{1}{K}\sum_k \frac{|s_{k,i}-m_{k,i}|}{\sqrt{\sigma_{s,k,i}^2 + \sigma_{m,k,i}^2}} \ (2)$$

- $K$ est le nombre de canaux considérés dans la somme. Il peut s'agir de l'ensemble des canaux du spectre ou de certains d'entre eux ;
- $k$ désigne chaque canal;
- $S_{k,i}$ et $m_{k,i}$ désignent respectivement la valeur, à un canal $k$, du spectre élémentaire courant $S_i$ et du spectre moyen $m_i$ ;
- $\sigma_{s,k,i}$ et $\sigma_{m,k,i}$ désignent respectivement l'écart type, à un canal $k$, du spectre élémentaire courant $S_i$ et du spectre moyen $m_i$. Chacun de ces écart-type sont déterminés en considérant les canaux situés dans un voisinage $V_k$ du canal $k$. Le voisinage $V_k$ représente un nombre de canaux $N_{V_k}$ voisins du canal $k$. Le nombre de canaux $N_{V_k}$ est par exemple égal à 7, s'étendant de part et d'autres du canal $k$.

Lorsque les durées d'acquisition des spectres élémentaire $S_1 ... S_{i-1}$ sont identiques, la valeur $m_{k,i}$, en chaque canal $k$, du spectre moyen $m_i$ peut être :

$$m_{k,i} = \frac{1}{i-1}\sum_{j=1}^{i-1} S_{k,j} \ (3)$$

Lorsque les durées d'acquisition des différents spectres élémentaires sont variables, la valeur $m_{k,i}$, en chaque canal $k$, du spectre moyen $m_i$ peut être :

$$m_{k,i} = \frac{1}{i-1}\sum_{j=1}^{i-1} S_{k,j}^{norm} \ (4)$$

$S_{k,j}^{norm}$ est un spectre normalisé, prenant en compte une durée d'acquisition unitaire, avec, lorsque la puissance du faisceau lumineux est constante :

$$S_{k,j}^{norm} = \frac{1}{T_j} S_{k,j} \ (5)$$

Lorsque la puissance du faisceau lumineux varie selon les spectres élémentaires, on peut établir une fonction de correction de façon à obtenir, à partir de chaque spectre mesuré , un spectre normalisé dont chaque canal $k$ prend la valeur $S_{k,j}^{norm} = \frac{1}{T_j} f_j(S_{k,j}) \ (6)$, où $f_j$ est une fonction de correction établie expérimentalement, prenant en compte la puissance $P_j$ du faisceau d'illumination 12 lors de l'acquisition d'un spectre élémentaire $S_j$. La fonction de correction peut être établie au cours d'une phase de calibration sur un objet de calibration, en modulant la puissance du faisceau d'illumination 12 sur l'objet de calibration et en comparant les spectres obtenus.

Précisons que la somme établie dans l'équation (2), ou dans l'équation (7) ci-dessous peut être restreinte aux canaux présents dans une ou plusieurs régions d'intérêt ROI du spectre. Ces régions d'intérêt peuvent avoir été prédéterminées.

Une autre expression du critère d'acceptation est :

$$C_i = \frac{1}{K}\sum_k \frac{|\bar{s}^l_{k,i} - \bar{m}^l_{k,i}|}{\sqrt{\sigma'^2_{s,k,i} + \sigma'^2_{m,k,i}}} \quad (7)$$

où :

- $\bar{s}^l_{k,i}$ est la valeur moyenne, au canal $k$, d'un spectre lissé $S^l_i$, obtenu après application d'un lissage à chaque spectre élémentaire $S_i$, ladite valeur moyenne étant calculée en considérant les canaux situés dans un voisinage $V_k$ du canal $k$ du spectre lissé $S^l_i$.

- $\bar{m}^l_{k,i}$ est la valeur moyenne, au canal $k$, d'un spectre lissé moyen $m^l_i$, obtenu par le calcul d'une moyenne de spectres lissés $S^l_1 ... S^l_{i-1}$ respectivement obtenus en appliquant un lissage à chaque spectre élémentaire $S_1 ... S_{i-1}$. La valeur moyenne $\bar{m}^l_{k,i}$ est calculée en considérant les canaux situés dans un voisinage $V_k$ du canal $k$ du spectre lissé moyen $m^l_i$. Le spectre lissé moyen $m^l_i$ s'obtient, à partir des spectres lissés $S^l_1 ... S^l_{i-1}$ en mettant en oeuvre l'une des équations (3) à (5).

- $\sigma'^2_{s,k,i}$ est un écart-type de bruit, calculé en considérant les canaux situés dans un voisinage $V_k$ du canal $k$, d'un spectre dit de bruit $S'_i$. Le spectre de bruit $S'_i$ est obtenu, à partir du spectre élémentaire $S_i$ et du spectre lissé $S^l_i$, par exemple par une soustraction selon l'expression :

$$S'_i = S_i - S^l_i \quad (8).$$

$\sigma'^2_{s,k,i}$ peut être estimé par l'expression suivante :

$$\sigma'^2_{s,k,i} = \frac{1}{N_{V_k}}\sum_{j\in V_k} S'_{j,k}{}^2 \quad (9)$$

- $\sigma'^2_{m,k,i}$ est l'écart type de bruit moyen, calculé en considérant les canaux situés dans un voisinage $V_k$ du canal $k$, d'un spectre de bruit moyen $m'_i$. Le spectre de bruit moyen est obtenu, à partir du spectre moyen $m_i$ et du spectre lissé moyen $m^l_i$, par exemple par une soustraction, selon l'expression :

$$m'_i = m_i - m^l_i \quad (10).$$

$\sigma'^2_{m,k,i}$ peut être estimé par l'expression suivante :

$$\sigma'^2_{m,k,i} = \frac{1}{N_{V_k}}\sum_{j\in V_k} m'_{j,k}{}^2 \quad (11)$$

L'homme du métier sera à même de définir d'autres critères d'acceptation que ceux décrits en lien avec les expressions (2) et (7).

Par ailleurs, les expressions (2) et (7) peuvent s'appliquer à des spectres de référence $S_{ref}$ différents du spectre moyen $m_i$.

Lorsque le critère d'acceptation $C_i$ dépasse un certain seuil, préalablement déterminé, le spectre élémentaire courant $S_i$ est rejeté. Lorsque le critère d'acceptation $C_i$ est inférieur audit seuil, le spectre élémentaire courant $S_i$ est accepté et combiné au spectre combiné $S_{C,i-1}$ résultant de l'itération précédente.

Selon un mode de réalisation, la durée d'acquisition $T_i$ d'un spectre élémentaire courant $S_i$ est déterminée en fonction de la valeur du critère d'acceptation $C_{i-1}$ établi lors de l'itération précédente. En fonction de cette valeur, la durée d'acquisition peut être augmentée ou diminuée. Par exemple, si le critère d'acceptation se rapproche du seuil de rejet, la durée d'acquisition peut être diminuée.

Selon un mode de réalisation, la puissance $P_i$ du faisceau d'illumination 12, lors de l'acquisition d'un spectre courant $S_i$, est déterminée en fonction de la valeur du critère d'acceptation $C_{i-1}$ établi lors de l'itération précédente. En fonction de cette valeur, la puissance du faisceau d'illumination 12 peut être augmentée ou diminuée. Par exemple, si le critère d'acceptation se rapproche du seuil de rejet, la puissance du faisceau d'illumination peut être diminuée. La puissance du faisceau d'illumination peut également être modulée selon une séquence prédéfinie.

La modulation de la puissance du faisceau d'illumination est particulièrement intéressante lorsque la particule analysée peut être une bactérie à l'état de spore ou non sporulée. Les inventeurs ont constaté que l'obtention d'un spectre Raman exploitable pour une spore nécessite une puissance d'illumination relativement faible, tandis que l'obtention d'un spectre Raman exploitable pour une bactérie non sporulée nécessite une puissance plus importante. Dès lors, lorsque la particule examinée est inconnue, il est pertinent d'effectuer des premières acquisitions selon en appliquant une puissance relativement faible, par exemple 7 mW, puis d'augmenter progressivement la puissance au fur et à mesure des itérations, par exemple 12 mW, puis 20 mW, puis 40 mW.

La modulation du temps d'acquisition et/ou de la puissance peuvent également être déterminées, au cours de chaque itération, en fonction d'un rapport signal sur bruit du spectre combiné mis à jour au cours de l'itération précédente.

Selon un mode de réalisation, lorsqu'un spectre élémentaire courant est accepté, il subit un lissage avant d'être additionné au spectre combiné résultant de l'itération précédente $S_{C,i-1}$. Ainsi, le spectre combiné, résultant de chaque itération, s'obtient par l'addition d'un spectre élémentaire courant lissé, l'expression (1) étant remplacée par :

$$S_{C,i} = S_{C,i-1} + S_i^l \quad (12)$$

. Au-delà d'un simple lissage, le spectre courant peut subir d'autres traitements connus de l'homme du métier avant d'être ajouté au spectre combiné $S_{C,i-1}$, par exemple une suppression de la ligne de base.

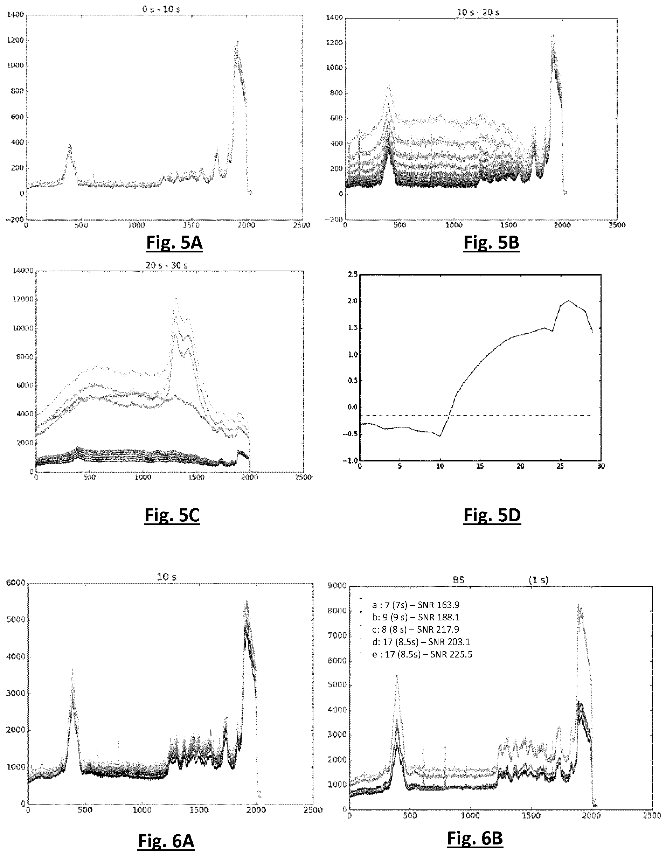

Les figures 5A à 5C illustrent des spectres élémentaire $S_i$ étant acquis durant une durée d'acquisition $T_i$ de 1 seconde, sur une bactérie de type *Serratia marcescens.*

Sur la figure 5A, on a représenté 10 spectres élémentaires de 1 seconde respectivement acquis entre un instant initial t = 0s et t = 1s, entre t = 1s et t = 2s, entre t = 2s et t = 3s...t = 9s et t = 10s. On observe que chaque spectre élémentaire est répétitif. Ainsi, entre les dix premières secondes d'exposition, la bactérie ne subit pas de photo-dégradation.

Sur la figure 5B, on a représenté 10 spectres élémentaires de 1 seconde respectivement acquis entre les instants t = 10s et t = 11s, entre t = 11s et t = 12s, entre t = 12s et t = 13s...t = 19s et t = 20s. On constate que les spectres se dégradent peu à peu, notamment à partir de t = 15s, témoignant d'une photodégradation.

Sur la figure 5C, on a représenté 10 spectres élémentaires de 1 seconde respectivement acquis entre les instants t = 20s et t = 21s, entre t = 21s et t = 22s, entre t = 22s et t = 23s...t = 29s et t = 30s. Ces spectres ne sont plus exploitables.

On a représenté, sur la figure 5D, l'évolution du logarithme du critère d'acceptation, tel que défini en lien avec l'expression (2), sur la base des spectres élémentaires représentés sur les figures 5A à 5C. Lorsque ce logarithme dépasse -0.1, ce qui correspond à la douzième acquisition, on considère que les spectres élémentaires ne sont pas plus représentatifs de la bactérie analysée. Aussi, pour obtenir un spectre représentatif de la bactérie, il convient d'accumuler les spectres élémentaires acquis entre t = 0s et t = 12s.

L'avantage du procédé est que la durée d'acquisition d'un spectre n'est pas fixée initialement et est optimisée de manière à maximiser le nombre de spectres élémentaires représentatifs de la bactérie. Ainsi, contrairement à l'art antérieur, la durée d'acquisition cumulée $T$ s'auto-ajuste, l'acquisition étant stoppée lors de la détection d'une photo-dégradation à partir d'un ou plusieurs spectres élémentaires.

Le procédé décrit ci-avant a été testé sur des bactéries de type *Bacillus subtilis* (BS). On a représenté, sur la figure 6A, 4 spectres Raman acquis selon un procédé de l'art antérieur, la durée d'acquisition étant fixée initialement à 10s. Sur la figure 6B, on a représenté 5 spectres S réalisés, parmi lesquels :

- deux spectres correspondent à une accumulation de 17 spectres élémentaires de durée 1s, ce qui correspond à une durée cumulée d'accumulation de 17s ;
- un spectre est obtenu par une accumulation de 9 spectres élémentaires de durée 1s, ce qui correspond à une durée cumulée d'accumulation de 9s ;
- un spectre est obtenu par une accumulation de 8 spectres élémentaires de durée 1s, ce qui correspond à une durée cumulée d'accumulation de 8s ;
- un spectre est obtenu par une accumulation de 7 spectres élémentaires de durée 1s, ce qui correspond à une durée cumulée d'accumulation de 7s ;

On a calculé le rapport signal sur bruit SNR de chaque spectre S. Une expression possible du rapport signal à bruit est :

$$SNR = \frac{\sqrt{\frac{1}{K_1}\sum_{k \in ROI_1}\left(S_k^l\right)^2}}{\sqrt{\frac{1}{K_2}\sum_{k \in ROI_2}(S'_k)^2}} \quad (12)$$

où :

- $S_k^l$ est le contenu de chaque canal $k$ d'un spectre lissé $S^l$ obtenu par lissage du spectre $S$ résultant de l'accumulation des spectres élémentaires ;
- $S'_k$ est contenu de chaque canal d'un spectre $S'$ obtenu une soustraction du spectre lissé $S^l$ du spectre $S$
- $ROI_1$ et $ROI_2$ désignent respectivement des régions d'intérêt du spectre, comportant $K_1$ et $K_2$ canaux.

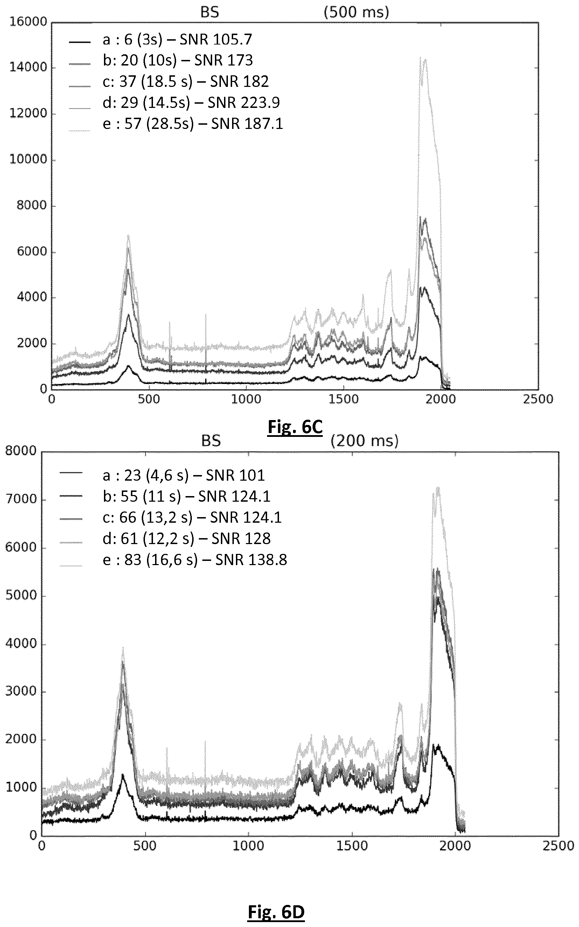

Sur la figure 6C, on a représenté 5 spectres S obtenus en accumulant des spectres élémentaires de durée 500 ms.

- un spectre est obtenu par une accumulation de 57 spectres élémentaires, ce qui correspond à une durée cumulée d'accumulation de 28.5s ;
- un spectre est obtenu par une accumulation de 37 spectres élémentaires, ce qui correspond à une durée cumulée d'accumulation de 18.5s ;
- un spectre est obtenu par une accumulation de 29 spectres élémentaires, ce qui correspond à une durée cumulée d'accumulation de 14.5s ;
- un spectre est obtenu par une accumulation de 20 spectres élémentaires, ce qui correspond à une durée cumulée d'accumulation de 10s ;
- un spectre est obtenu par une accumulation de 6 spectres élémentaires, ce qui correspond à une durée cumulée d'accumulation de 3s, ce dernier présentant un faible rapport signal sur bruit par rapport aux précédents spectres élémentaires.

Sur la figure 6D, on a représenté 5 spectres S obtenus en accumulant des spectres élémentaires de durée 200 ms.

- un spectre est obtenu par une accumulation de 83 spectres élémentaires de durée 200 ms, ce qui correspond à une durée cumulée d'accumulation de 16.6 s ;
- un spectre est obtenu par une accumulation de 66 spectres élémentaires, ce qui correspond à une durée cumulée d'accumulation de 13.2 s ;
- un spectre est obtenu par une accumulation de 61 spectres élémentaires, ce qui correspond à une durée cumulée d'accumulation de 12.2 s ;
- un spectre est obtenu par une accumulation de 55 spectres élémentaires, ce qui correspond à une durée cumulée d'accumulation de 11 s ;
- un spectre est obtenu par une accumulation de 23 spectres élémentaires, ce qui correspond à une durée cumulée d'accumulation de 4.6 s, ce dernier présentant un faible rapport signal sur bruit par rapport aux précédents spectres élémentaires.

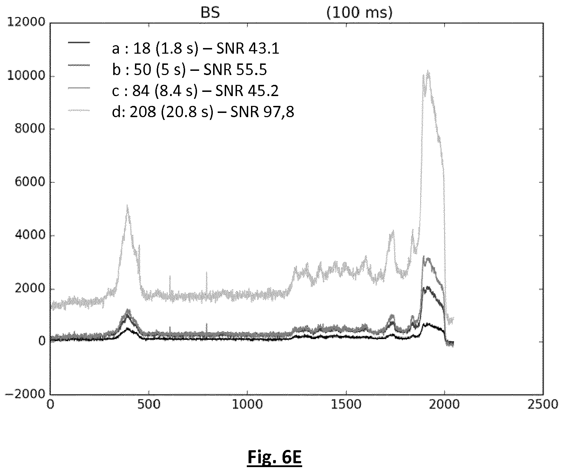

Sur la figure 6E, on a représenté 4 spectres obtenus en accumulant des spectres élémentaires de durée 100 ms. :

- un spectre est obtenu par une accumulation de 208 spectres élémentaires, ce qui correspond à une durée cumulée d'accumulation de 20.8 s ;
- un spectre est obtenu par une accumulation de 84 spectres élémentaires, ce qui correspond à une durée cumulée d'accumulation de 8.4 s ;
- un spectre est obtenu par une accumulation de 50 spectres élémentaires, ce qui correspond à une durée cumulée d'accumulation de 5s ;
- un spectre est obtenu par une accumulation de 18 spectres élémentaires, ce qui correspond à une durée cumulée d'accumulation de 1.8 s.

Ces figures illustrent la nécessité d'optimiser le nombre de spectres élémentaires à accumuler et la durée d'acquisition de chaque spectre élémentaire, de façon à obtenir des spectres dont le rapport signal sur bruit est optimal. On observe ici que l'accumulation d'un trop grand nombre de spectres élémentaires de faible durée d'acquisition, en l'occurrence 100 ms, conduit à l'obtention de spectres présentant un rapport signal sur bruit peu satisfaisant. Cela provient du bruit de lecture de chaque spectre élémentaire, se cumulant sur le spectre combiné, et cela d'autant plus que le nombre de spectres élémentaires combinés est important.

Sur ce type de bactérie, des durées d'acquisition élémentaires de 500 ms ou 1 s conduisent à des résultats optimaux en termes de rapport signal sur bruit, dès lors que la durée cumulée d'acquisition dépasse 7s.

Par ailleurs, on observe que le rapport signal sur bruit de spectres, acquis selon l'invention, est proche du rapport signal sur bruit d'un spectre acquis selon une durée d'acquisition comparable. On sait qu'à durée d'acquisition égale, un spectre obtenu par une sommation de plusieurs spectres élémentaires présente un rapport signal à bruit plus faible qu'un spectre acquis au cours d'une seule acquisition. Cependant, les essais expérimentaux précédemment décrits montrent que la différence est négligeable, sous réserve d'un rapport signal sur bruit suffisant de chaque spectre élémentaire, notamment eu égard au bruit de lecture.

L'invention a été exposée en relation avec l'analyse de bactéries mais elle pourra s'appliquer à toute autre espèce biologique, voire à toute autre particule sensible à une surexposition. Par ailleurs, elle peut également s'appliquer à l'acquisition de spectres de fluorescence, le rayonnement 14 détecté par le photodétecteur étant un rayonnement de fluorescence dont on acquiert le spectre. Dans ce cas, la source de lumière 10 est une source apte à émettre un faisceau d'illumination 12 apte à entraîner l'émission d'un rayonnement de fluorescence 14 par l'espèce analysée.

L'invention trouvera en particulier son application dans le suivi de cultures bactériennes, dans le contrôle d'échantillons biologiques ou dans le contrôle d'échantillons prélevés dans l'environnement, dans l'industrie agroalimentaire ou d'autres domaines industriels.

## Revendications

1. Procédé d'acquisition d'un spectre (S) représentatif d'une particule (21) comportant les étapes suivantes,

 - illumination de la particule (21) par une source de lumière (10);
 - détection, par un photodétecteur (30), d'un rayonnement lumineux (14) émis ou diffusé par ladite particule (21) sous l'effet de l'illumination et acquisition d'un spectre (S) à partir du rayonnement lumineux détecté ;

 le procédé étant **caractérisé en ce que** l'acquisition du spectre comporte les étapes suivantes :

 i) acquisition d'un premier spectre élémentaire ($S_1$) et formation d'un spectre combiné initial ($S_{C,i=0}$) à partir du premier spectre élémentaire, la durée d'acquisition du premier spectre élémentaire étant déterminée pour éviter une dégradation de la particule ;
 ii) acquisition d'un spectre élémentaire ($S_i$) dit courant ;
 iii) prise en compte d'un spectre de référence ($S_{ref}$);
 iv) détermination d'un critère d'acceptation ($C_i$)

du spectre élémentaire courant ($S_i$), le critère d'acceptation correspondant à un écart entre le spectre élémentaire courant ($S_i$) et le spectre de référence ($S_{ref}$);

v) en fonction du critère d'acceptation ($C_i$):

- acceptation du spectre élémentaire courant ($S_i$) et mise à jour du spectre combiné ($S_{C,i}$) par une addition du spectre élémentaire courant ($S_i$) au spectre combiné initial ($S_{C,i=0}$) ou au spectre combiné ($S_{C,i-1}$) résultant d'une itération précédente;

- ou rejet du spectre élémentaire courant ($S_i$);

vi) réitération des étapes ii) à vi), ou sortie de l'itération ;

vii) détermination d'un spectre (S), représentatif de la particule (21), en fonction du spectre combiné obtenu ($S_{C,i}$) lors de l'étape v) de la dernière itération.

2. Procédé selon la revendication 1, dans lequel le spectre de référence ($S_{ref}$) est un spectre moyen ($m_i$), représentatif d'une moyenne de spectres élémentaires ($S_1 ... S_{i-1}$) formant le spectre combiné ($S_{C,i=0}$) initial ou le spectre combiné ($S_{C,i-1}$) résultant d'une itération précédente.

3. Procédé selon la revendication 2, dans lequel le spectre moyen ($m_i$) est établi à partir d'une normalisation de spectres élémentaires formant le spectre combiné, en fonction d'une durée d'acquisition ($T_j$) de chaque spectre élémentaire ($S_1 ... S_{i-1}$) formant le spectre combiné ($S_{C,i-1}$) pris en compte au cours de chaque itération (i).

4. Procédé selon l'une quelconque des revendications 1 à 3, dans lequel lors de l'étape iv), e critère d'acceptation ($C_i$) est déterminé à partir d'une soustraction du spectre de référence et du spectre élémentaire courant ($S_i$), de préférence normalisée par un indicateur du bruit dans le spectre de référence ($S_{ref}$) et dans le spectre élémentaire courant ($S_i$).

5. Procédé selon la revendication 1, dans lequel le spectre de référence ($S_{ref}$) est le premier spectre élémentaire ($S_1$), acquis lors de l'étape i), ou un spectre élémentaire ($S_1 ... S_{i-1}$) acquis au cours d'une itération précédente.

6. Procédé selon la revendication 1, dans lequel le spectre de référence ($S_{ref}$) est un spectre déterminé a priori.

7. Procédé selon la revendication 1, dans lequel le spectre de référence ($S_{ref}$) comporte une ou plusieurs régions d'intérêt, dites régions d'intérêt de référence ($ROI_{ref}$) du spectre élémentaire courant ($S_i$).

8. Procédé selon la revendication 7, dans lequel le critère d'acceptation ($C_i$) est établi par une comparaison du spectre élémentaire courant, dans au moins une région d'intérêt sélectionnée ($ROI_s$), avec le spectre de référence ($S_{ref}$).

9. Procédé selon l'une quelconque des revendications 1 à 8, dans lequel lors de l'étape v), la mise à jour du spectre combiné ($S_{C,i}$) est réalisée par une somme, éventuellement pondérée :

■ du spectre élémentaire courant ($S_i$) et du spectre combiné ($S_{C,i=0}$) initial ou du spectre combiné ($S_{C,i-1}$) résultant d'une itération précédente;

■ ou du spectre élémentaire courant ($S_i$), auquel un traitement est appliqué, et du spectre combiné ($S_{C,i=0}$) initial ou du spectre combiné ($S_{C,i-1}$) résultant d'une itération précédente.

10. Procédé selon l'une quelconque des revendications précédentes, dans lequel lors de l'étape vi), le critère d'itération correspond :

- à un nombre prédéterminé d'itérations ;
- et/ou à l'obtention d'un nombre prédéterminé de rejets de spectres élémentaires courants ($S_i$);
- et/ou à l'obtention d'un nombre d'évènements prédéterminés dans le spectre combiné ($S_{C,i}$) résultant de l'étape v).

11. Procédé selon l'une quelconque des revendications 1 à 10, dans lequel suite à la première itération, l'étape ii) comporte une étape de détermination d'une durée d'acquisition du spectre courant ($T_i$), en fonction de la valeur d'un critère d'acceptation ($C_{i-1}$) résultant de l'étape iii) d'une itération précédente.

12. Procédé selon l'une quelconque des revendications précédentes, dans lequel la source de lumière (11) générant un faisceau d'illumination (12) se propageant jusqu'à la particule, suite à la première itération, l'étape ii) comporte une étape de détermination d'une puissance ($P_i$) du faisceau d'illumination (12) en fonction de la valeur d'un critère d'acceptation ($C_{i-1}$) résultant de l'étape iv) d'une itération précédente.

13. Procédé selon l'une quelconque des revendications précédentes, dans lequel le photodétecteur (30) est un spectromètre Raman, le spectre acquis (S) étant un spectre Raman représentatif de la particule.

14. Procédé selon l'une quelconque des revendications précédentes, dans lequel le photodétecteur est un spectromètre de fluorescence, le spectre acquis (S)

étant un spectre de fluorescence de la particule.

15. Dispositif (1) d'analyse d'une particule (21) comportant :

- une source de lumière (10) ;
- un support (20) destiné à recevoir une particule (21) ;
- un photodétecteur (30) apte à détecter un signal de réponse, émis par la particule lorsqu'elle est illuminée par la source de lumière (10) et à en former un spectre ;
- un processeur (32), configuré pour mettre en oeuvre les étapes i) à vii) du procédé objet d'une quelconque des revendications précédentes, à partir d'une pluralité de spectres élémentaires ($S_1$, $S_i$) acquis par le photodétecteur, pour former un spectre ($S$) représentatif de la particule.

**Patentansprüche**

1. Verfahren zur Erfassung eines für ein Teilchen (21) repräsentativen Spektrums (S), das die folgenden Schritte aufweist,

- Beleuchtung des Teilchens (21) durch eine Lichtquelle (10);
- Erkennung, durch einen Photodetektor (30), einer vom Teilchen (21) unter der Wirkung der Beleuchtung emittierten oder gestreuten Lichtstrahlung (14) und Erfassung eines Spektrums (S) ausgehend von der erkannten Lichtstrahlung;

wobei das Verfahren **dadurch gekennzeichnet ist, dass** die Erfassung des Spektrums die folgenden Schritte aufweist:

i) Erfassung eines ersten Elementarspektrums ($S_1$) und Bilden eines kombinierten Ausgangsspektrums ($S_{C,i=0}$) ausgehend vom ersten Elementarspektrum, wobei die Erfassungsdauer des ersten Elementarspektrums bestimmt wird, um eine Verschlechterung des untersuchten Teilchens zu vermeiden;
ii) Erfassung eines aktuell genannten Elementarspektrums (Si);
iii) Berücksichtigung eines Bezugsspektrums ($S_{ref}$);
iv) Bestimmung eines Akzeptanzkriteriums ($C_i$) des aktuellen Elementarspektrums ($S_i$), wobei das Akzeptanzkriterium einer Abweichung zwischen dem aktuellen Elementarspektrum ($S_i$) und dem Bezugsspektrum ($S_{ref}$) entspricht;
v) abhängig vom Akzeptanzkriterium ($C_i$):

- Akzeptanz des aktuellen Elementarspektrums ($S_i$) und Aktualisierung des kombinierten Spektrums ($S_{C,i}$) durch eine Addition des aktuellen Elementarspektrums ($S_i$) zum kombinierten Ausgangsspektrum ($S_{C,i=0}$) oder zum aus einer vorhergehenden Iteration resultierenden kombinierten Spektrum ($S_{C,i-1}$);
- oder Zurückweisung des aktuellen Elementarspektrums ($S_i$);

vi) Reiteration der Schritte ii) bis vi), oder Verlassen der Iteration;
vii) Bestimmung eines für das Teilchen (21) repräsentativen Spektrums (S) abhängig vom im Schritt v) der letzten Iteration erhaltenen kombinierten Spektrum ($S_{C,i}$).

2. Verfahren nach Anspruch 1, wobei das Bezugsspektrum ($S_{ref}$) ein mittleres Spektrum (mi) ist, das für einen Mittelwert von Elementarspektren ($S_1$ ... $S_{i-1}$) repräsentativ ist, die das kombinierte Ausgangsspektrum ($S_{C,i=0}$) oder das aus einer vorhergehenden Iteration resultierende kombinierte Spektrum ($S_{C,i-1}$) bilden.

3. Verfahren nach Anspruch 2, wobei das mittlere Spektrum (mi) ausgehend von einer Normierung von das kombinierte Spektrum bildenden Elementarspektren erstellt wird, abhängig von einer Erfassungsdauer ($T_j$) jedes das kombinierte Spektrum ($S_{C,i-1}$) bildenden Elementarspektrums ($S_1$ ... $S_{i-1}$), das bei jeder Iteration (i) berücksichtigt wird.

4. Verfahren nach einem der Ansprüche 1 bis 3, wobei im Schritt iv) das Akzeptanzkriterium ($C_i$) ausgehend von einer Subtraktion des Bezugsspektrums und des aktuellen Elementarspektrums ($S_i$) bestimmt wird, vorzugsweise normiert durch einen Indikator des Rauschens im Bezugsspektrum ($S_{ref}$) und im aktuellen Elementarspektrum ($S_i$).

5. Verfahren nach Anspruch 1, wobei das Bezugsspektrum ($S_{ref}$) das im Schritt i) erfasste erste Elementarspektrum ($S_1$) oder ein während einer vorhergehenden Iteration erfasstes Elementarspektrum ($S_1$ ... $S_{i-1}$) ist.

6. Verfahren nach Anspruch 1, wobei das Bezugsspektrum ($S_{ref}$) ein a priori bestimmtes Spektrum ist.

7. Verfahren nach Anspruch 1, wobei das Bezugsspektrum ($S_{ref}$) einen oder mehrere interessierende Bereiche, interessierende Bezugsbereiche ($ROI_{ref}$) genannt, des aktuellen Elementarspektrums ($S_i$) aufweist.

8. Verfahren nach Anspruch 7, wobei das Akzeptanzkriterium ($C_i$) durch einen Vergleich des aktuellen Elementarspektrums in mindestens einem ausgewählten interessierenden Bereich ($ROI_s$) mit dem Bezugsspektrum ($S_{ref}$) erstellt wird.

9. Verfahren nach einem der Ansprüche 1 bis 8, wobei im Schritt v) die Aktualisierung des kombinierten Spektrums ($S_{C,i}$) durchgeführt wird durch eine ggf. gewichtete Summe:

   - des aktuellen Elementarspektrums ($S_i$) und des kombinierten Ausgangsspektrums ($S_{C,i=0}$) oder des aus einer vorhergehenden Iteration resultierenden kombinierten Spektrums ($S_{C,i-1}$);
   - oder des aktuellen Elementarspektrums ($S_i$), an das eine Verarbeitung angewendet wird, und des kombinierten Ausgangsspektrums ($S_{C,i=0}$) oder des aus einer vorhergehenden Iteration resultierenden kombinierten Spektrums ($S_{C,i-1}$).

10. Verfahren nach einem der vorhergehenden Ansprüche, wobei im Schritt vi) das Iterationskriterium entspricht:

    - einer vorbestimmten Anzahl von Iterationen;
    - und/oder dem Erhalt einer vorbestimmten Anzahl von Zurückweisungen von aktuellen Elementarspektren ($S_i$);
    - und/oder dem Erhalt einer Anzahl von vorbestimmten Ereignissen im aus dem Schritt v) resultierenden kombinierten Spektrum ($S_{C,i}$).

11. Verfahren nach einem der Ansprüche 1 bis 10, wobei nach der ersten Iteration der Schritt ii) einen Schritt der Bestimmung einer Erfassungsdauer des aktuellen Spektrums ($T_i$) abhängig vom Wert eines aus dem Schritt iii) einer vorhergehenden Iteration resultierenden Akzeptanzkriteriums ($C_{i-1}$) enthält.

12. Verfahren nach einem der vorhergehenden Ansprüche, wobei, da die Lichtquelle (11) einen Beleuchtungsstrahl (12) generiert, der sich bis zum Teilchen ausbreitet, nach der ersten Iteration, der Schritt ii) einen Schritt der Bestimmung einer Leistung ($P_i$) des Beleuchtungsstrahls (12) abhängig vom Wert eines aus dem Schritt iv) einer vorhergehenden Iteration resultierenden Akzeptanzkriteriums ($C_{i-1}$) aufweist.

13. Verfahren nach einem der vorhergehenden Ansprüche, wobei der Photodetektor (30) ein Raman-Spektrometer ist, wobei das erfasste Spektrum (S) ein für das Teilchen repräsentatives Raman-Spektrum ist.

14. Verfahren nach einem der vorhergehenden Ansprüche, wobei der Photodetektor ein Fluoreszenzspektrometer ist, wobei das erfasste Spektrum (S) ein Fluoreszenzspektrum des Teilchens ist.

15. Vorrichtung (1) zur Analyse eines Teilchens (21), die aufweist:

    - eine Lichtquelle (10);
    - einen Träger (20), der dazu bestimmt ist, ein Teilchen (21) aufzunehmen;
    - einen Photodetektor (30), der fähig ist, ein Antwortsignal zu erkennen, das von dem Teilchen gesendet wird, wenn es von der Lichtquelle (10) beleuchtet wird, und daraus ein Spektrum zu bilden;
    - einen Prozessor (32), der konfiguriert ist, die Schritte i) bis vii) des Verfahrens, das Gegenstand eines der vorhergehenden Ansprüche ist, ausgehend von einer Vielzahl von vom Photodetektor erfassten Elementarspektren ($S_1$, $S_i$) durchzuführen, um ein für das Teilchen repräsentatives Spektrum (S) zu bilden.

**Claims**

1. A method for acquiring a spectrum (S) representative of a particle (21), comprising the following steps:

   - illuminating the particle (21) with a light source (10);
   - detecting, using a photodetector (30), light radiation emitted or scattered (14) by said particle (21) under the effect of the illumination and acquiring a spectrum (S) from the detected light radiation;

   wherein the method comprises :

   i) acquiring a first elementary spectrum ($S_1$) and forming an initial combined spectrum ($S_{C,i=0}$) from the first elementary spectrum, the duration of the acquisition of the first elementary spectrum being determined to prevent any degradation of the particle;
   ii) acquiring a current elementary spectrum ($S_i$);
   iii) taking into account a reference spectrum ($S_{ref}$);
   iv) determining an acceptance criterion ($C_i$) of the current elementary spectrum ($S_i$), the acceptance criterion corresponding to a deviation between the current elementary spectrum ($S_i$) and the reference spectrum ($S_{ref}$);
   v) depending on the acceptance criterion ($C_i$):

      - accepting the current elementary spectrum ($S_i$) and updating the combined spectrum ($S_{C,i}$) by adding the current elementary spectrum ($S_i$) to the initial combined spectrum ($S_{C,i=0}$) or to the combined spectrum resulting from a preceding iteration ($S_{C,i-1}$);
      - or rejecting the current elementary spectrum;

vi) reiterating ii) to vi), or exiting from the iteration;

vii) determining a spectrum (S), representative of the particle (21), depending on the combined spectrum (Sc,i) obtained in v) of the last iteration.

2. The method according to claim 1, wherein the reference spectrum ($S_{ref}$) is an average spectrum (mi), representative of an average of elementary spectra ($S_1 ... S_{i-1}$) forming the initial combined spectrum ($S_{C,i=0}$) or the combined spectrum ($S_{C,i-1}$) resulting from a preceding iteration.

3. The method according to claim 2, wherein the average spectrum (mi) is established on the basis of a normalization of elementary spectra forming the combined spectrum ($S_{C,i-1}$), depending on an acquisition time ($T_j$) of each elementary spectrum ($S_1 ... S_{i-1}$) forming the combined spectrum ($S_{C,i-1}$) taken into account in each iteration (i).

4. The method according to any one of claims 1 to 3, wherein, in iv), the acceptance criterion ($C_i$) is determined on the basis of a subtraction of the reference spectrum and of the current elementary spectrum ($S_i$), this subtraction preferably being normalized by an indicator of the noise in the reference spectrum ($S_{ref}$) and in the current elementary spectrum ($S_i$).

5. The method according to claim 1, wherein the reference spectrum ($S_{ref}$) is the first elementary spectrum ($S_i$), acquired in i), or an elementary spectrum ($S_1 ... S_{i-1}$) acquired in a preceding iteration.

6. The method according to claim 1, wherein the reference spectrum ($S_{ref}$) is a spectrum determined *a priori*.

7. The method according to claim 1, wherein the reference spectrum ($S_{ref}$) includes one or more regions of interest ($ROI_{ref}$) of the current elementary spectrum ($S_i$).

8. The method according to claim 7, wherein the acceptance criterion ($C_i$) is established via a comparison of the current elementary spectrum, in at least one selected region of interest ($ROI_s$), with the reference spectrum ($S_{ref}$).

9. The method according to any one of claims 1 to 8, wherein, in v), the combined spectrum ($S_{C,i}$) is updated with a sum, which is optionally weighted:

- of the current elementary spectrum ($S_i$) and of the initial combined spectrum or of the combined spectrum ($S_{C,i=0}$) resulting from a preceding iteration ($S_{C,i-1}$);
- or of the current elementary spectrum ($S_i$), to

which processing is applied, and the initial combined spectrum ($S_{C,i=0}$) or the combined spectrum resulting from a preceding iteration ($S_{C,i-1}$).

10. The method according to any one of the preceding claims, wherein, in vi), the iteration criterion corresponds:

- to a preset number of iterations;
- and/or to the obtainment of a preset number of rejections of current elementary spectra ($S_i$);
- and/or to the obtainment of a preset number of events in the combined spectrum ($S_{C,i}$) resulting from v).

11. The method according to any one of claims 1 to 10, wherein, following the first iteration, ii) includes a step of determining an acquisition time ($T_i$) of the current spectrum, depending on the value of an acceptance criterion ($C_{i-1}$) resulting from iii) of a preceding iteration.

12. The method according to any one of the preceding claims, wherein the light source (11) generates an illuminating beam (12) that propagates as far as to the particle, and, following the first iteration, ii) includes a step of determining a power ($P_i$) of the illuminating beam (12) depending on the value of an acceptance criterion ($C_{i-1}$) resulting from iv) of a preceding iteration.

13. The method according to any one of the preceding claims, wherein the photodetector (30) is a Raman spectrometer, the acquired spectrum (S) being a Raman spectrum representative of the particle.

14. The method according to any one of the preceding claims, wherein the photodetector is a fluorescence spectrometer, the acquired spectrum (S) being a fluorescence spectrum of the particle.

15. A device (1) for analyzing a particle (21), including:

- a light source (10);
- a holder (20) configured to receive the particle (21);
- a photodetector (30) configured to detect a response signal, emitted by the particle when it is illuminated by the light source (10) and to form a spectrum therefrom; and
- a processor (32) that is configured to implement i) to vii) of the method according to claim 1, on the basis of a plurality of elementary spectra acquired by the photodetector, so as to form a spectrum representative of the particle.

**Fig. 1**

**Fig. 2A**

**Fig. 2B**

**Fig. 3A**

**Fig. 3B**

**Fig. 3C**

$$100$$

$$110$$

$$S_1$$

$$120$$

$$S_{C,i=0}$$

$$130$$

$$S_i$$

$$S_{ref}$$

$$140$$

$$C_i$$

$$150$$

$$S_{C,i} = S_{C,i-1} + S_i$$
$$S_{C,i} = S_{C,i-1}$$

$$S_{C,i}$$

$$160$$ $$S$$ $$170$$

**Fig. 4**

**Fig. 5A**

**Fig. 5B**

**Fig. 5C**

**Fig. 5D**

**Fig. 6A**

a : 7 (7s) – SNR 163.9
b: 9 (9 s) – SNR 188.1
c: 8 (8 s) – SNR 217.9
d: 17 (8.5s) – SNR 203.1
e : 17 (8.5s) – SNR 225.5

**Fig. 6B**

**Fig. 6C**

**Fig. 6D**

**Fig. 6E**

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015335248 A

- WO 2016003371 A

**Littérature non-brevet citée dans la description**

- **BUTLER H. et al.** Using Raman spectroscopy to characterize biological materials. *Nature Protocols,* 2016, vol. 11 (4